# EUROPEAN PATENT APPLICATION

(11) **EP 2 804 281 A1**
(43) Date of publication of application: **19.11.2014**
(21) Application number: 13305622.6
(22) Date of filing: 16.05.2013
(51) Int. Cl.: H02J 3/14

(54) **A method and a device for automatically stabilizing in an electrical power grid**

(71) Applicant: ALCATEL LUCENT, 92100 Boulogne-Billancourt (FR)
(72) Inventor: Kopp, Dieter, 70435 Stuttgart (DE); Stocker, Klaus, 70435 Stuttgart (DE)
(74) Representative: Kröhnert, Michael

(57) **Abstract**

The invention concerns a method of automatically stabilizing in an electrical power grid, comprising
- determining (201) information about a received voltage,
- determining (202) information about an energy demand of a consumer device,
- determining (204) a threshold for comparing to information about the received voltage,
- controlling (205) an output voltage for the consumer device depending on the determined information and threshold.

The invention concerns a device and computer program for automatically stabilizing as well.

## Description

### Field of the invention

The invention relates to a method and a device for automatically stabilizing in an electrical power grid.

### Background

Known methods and devices for automatically stabilizing an electrical power grid include reactive power insertion to control the voltage level, switchable transformer at the secondary substation, solid-state transformer at the secondary substation and renewal insertion control.

All of this known methods and devices cause high upfront investment and high operational cost.

### Summary

The object of the invention is thus to improve stabilization of power grids while reducing cost.

The main idea of the invention is a method for automatically stabilizing an electrical power grid, comprising
- determining information about a received voltage,
- determining information about an energy demand of a consumer device,
- determining a threshold for comparing to the received voltage,
- controlling an output voltage for the consumer device depending on the determined information and threshold. This way any consumer device having implemented this contributes to the stabilization of the power grid automatically.

Advantageously the threshold is determined depending on information about a voltage level at the consumer device measured over time. This increases robustness.

Advantageously a histogram of behavioral or ambiance parameters is recorded, and the threshold is determined depending on the recorded histogram. This allows considering long term historic data to further improve robustness. For example battery charge level, room temperature, filling status, water temperature level of consumer devices can be considered this way by depending on the histograms that reflect most likely needs derived from the history.

Advantageously the voltage level at the consumer device is predicted. This allows better responsiveness and further increases robustness.

Advantageously information indicative of the behavioral or ambiance parameters is received. This increases the precision of the control.

Advantageously the output voltage is controlled depending on a power limit. This mitigates adverse affects and increases user acceptance.

The invention also concerns a respective device and computer program for automatically stabilizing in an electrical power grid.

Further developments of the invention can be gathered from dependent claims and the following description.

### Brief description of the figures

In the following the invention will be explained further making reference to the attached drawings.
Fig. 1 schematically shows a part of a power grid.
Fig. 2 schematically shows a flow chart.
Fig. 3 schematically shows a histogram.
Fig. 4 schematically shows another histogram.

### Description of the embodiments

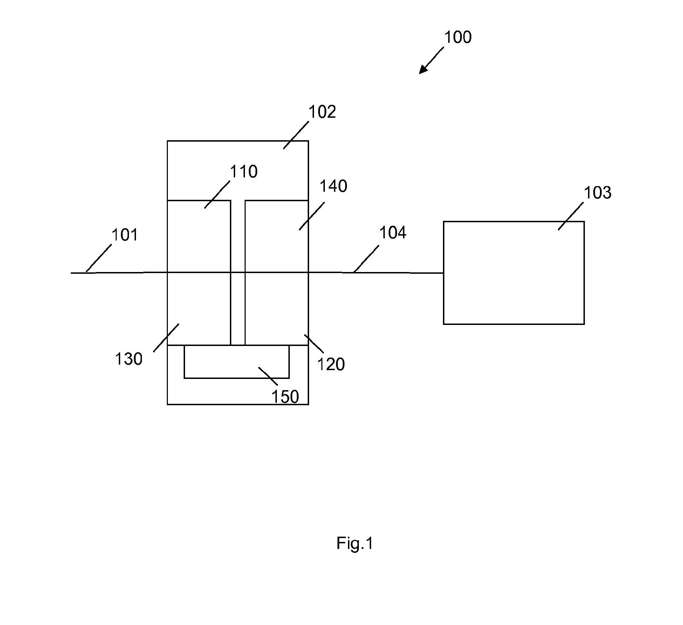

Figure 1 shows a first part of a power grid 100.

Said power grid 100 comprises a device 102, a power supply line 101 connecting to the device 102, a consumer device 103 and a power line 104, connecting the device 102 and the consumer device 103.

The power line 101 connects to a power source not depicted in figure 1. The device 102 is hence connected to the power source via the power line 101 on the one hand and to the consumer device 103 on the other hand.

The device 102 comprises an input 110 adapted to determine information about a received voltage. The input 110 for example comprises a voltage meter to measure the voltage at the power line 101.

The device 102 comprises another input 120 adapted to determine information about an energy demand of the consumer device 103. The other input 120 is for example adapted to receive information indicative of behavioral or ambiance parameters indicative of the energy demand of the consumer device 103. This information is for example a battery charge level, room temperature, filling status or water temperature level. To that end the other input 120 may comprise respective sensors or a data input for communicating with a respective sender installed in the consumer device 103.

In an example, the consumer device 103 is a water boiler e.g. for generating hot water, e.g. for heating or washing. The water boiler may in this example be connected to an insulated water reservoir and adapted to keep the water in the water reservoir at a predetermined standard temperature, e.g. 40°C.

In this example, the device 102 is adapted to receive the current predetermined temperature via the data input as behavioral parameter. Additionally in this case the outside temperature may be received as additional ambience parameter from a sensor outside of the water reservoir.

The device 102 comprises a processor 130 adapted to determine a threshold for comparing to the received voltage. The threshold is for example determined by the processor 130 depending on information about a voltage level at the consumer device 103 measured by the other input 120 over time. In this case the other input comprises a sensor for measuring the voltage level at the power line 104, or to receive current voltage levels from a sensor in the consumer device 103, adapted to perform the measurement and send the voltage level.

The threshold in the example of the water boiler is for example set to a value triggering the water boiler to heat the water to a higher than the standard temperature, e.g. 41° C in case the voltage level at the power line 104 is higher than a standard value, e.g. of 230 V. This way the water boiler consumes more energy and helps stabilizing the power supply grid without directly advert effect on the user of the water boiler.

The threshold in this example is set to a value triggering the water boiler to heat the water to a lower than standard temperature , e.g. 39° C in case the voltage level at the power line 104 is less than the standard value, e.g. of 230 V. This way the water boiler consumes less energy and helps stabilizing the power grid without directly affecting the user of the water boiler.

The effects on the user of the water boiler are negligible due to the used water reservoir. Any other type of behavioral or ambience parameter may be considered as well. For example the outside temperature may be used to keep the threshold at the standard value or increase or reduce the threshold when required. Time depending changes to the threshold may be implemented as well, e.g. for night time or day time.

Furthermore in critical situations of the power supply grid, e.g. in case the voltage at the power supply line 104 drops below a critical value, e.g. 210 V, the threshold is set to prevent the water boiler from heating, and even trigger an alert to the user of the water boiler.

In an example for the voltage at the supply line 104 a tolerance band, e.g. 10 V around the standard value, e.g. 230 V is used, in which the threshold is set to a value that allows the water boiler to heat the temperature to 40°C.

This means that the threshold is set depending on ambience or behavioral parameters of the consumer device 103.

Additionally or alternatively the power consumption could be controlled according to a packet control depending on the voltage. This means that in case of overload condition of the supply grid, the consumer device 103, e.g. the water boiler, is supplied with 100% of it's standard voltage supply, e.g. 240 V. At the standard value of the voltage at the supply line 104, it is supplied at 70%, e.g. 189 V, in a power sag at 30% and at critical power sag at 0%. This may be controlled smoothly.

The device 103 in a preferred embodiment furthermore comprises a storage 150 adapted to record a histogram of behavioral or ambiance parameters. In this case the processor 130 is adapted to determine the threshold depending on the recorded histogram.

The processor 130 may be adapted to predict the voltage level at the consumer device 103, in particular from the recorded histogram. To that end repeatedly appearing periods of time with high or low voltage demands are recognized in the histogram and used as prediction for the current day of the week and/or time of day.

The device 102 comprises an output 140 adapted to control a voltage output for the consumer device 103 via the power line 104. The output 140 is adapted to control this output voltage for the consumer device 103 depending on the determined information and threshold information and the threshold determined by the processor 130. The output 140 may be adapted to control the output voltage depending on a power limit. To that end the output 140 may comprise of a power meter to determine the power currently consumed by the consumer device 103 and control the voltage to not exceed or drop below the power limit. The power limit is for example a predetermined value stored in or derived from the histogram.

The output 140 is for example a switch, adapted to switch a connector for connecting and disconnecting the power supply line 101 to the power line 104. In an example the output 140 is adapted to perform pulse width modulation. The output 140 may be adapted as dimmer instead for dimming the voltage on the power line 104 as well or switch it on or off.

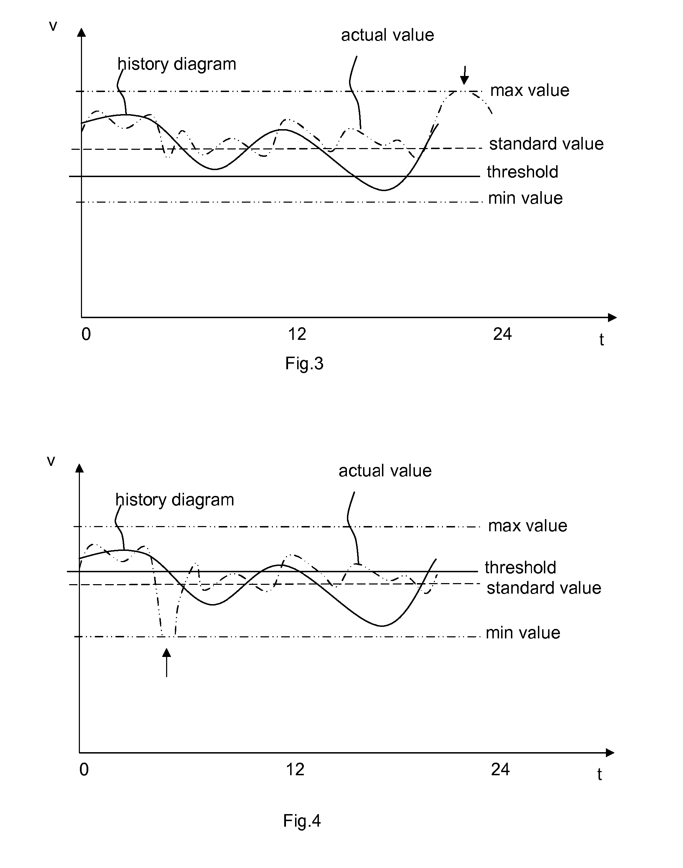

Figure 3 and 4 depict histograms. The explanation of figure 3 extends to figure 4 for elements having the same reference signs.

Each histogram shows a time period of one day, i.e. 24 hours on the horizontal axis. The voltage is depicted along the vertical axis.

The upper and lower limits are depicted as dash-dotted lines labeled as max value and min value respectively. The standard value is depicted as dashed line and labeled standard value. The threshold is depicted as solid line and labeled threshold.

All lines in the example are depicted parallel to the horizontal axis. They may be any other lines, e.g. curved or step functions increasing or decreasing over time.

The histogram shows the history for the voltage consumption of the consumer device 103 as solid curve labeled history diagram. This may be an average of the daily curves of many days, month or years.

The histogram shows the actual voltage consumption as dash-dotted line labeled actual voltage.

The difference between the histogram of figure 3 and 4 is the position of the threshold. In figure 3 it is below the standard value and in figure 4 it is above.

The threshold in figure 3 is set lower than the standard value to initiate a higher than standard consumption. This is for example triggered in case of low battery or low temperature that is far from target to ensure proper functionality of the consumer device 103.

In figure 4 the threshold is set above the standard value to trigger consumption of the consumer device 102 only if the power supplied by the power grid is above the standard value. This helps stabilizing the power grid.

In general the threshold level is varied depending e.g. on battery charge level, room temperature, filling status, water temperature level and depending on the histograms that reflect most likely needs derived from the history.

In figure 3 the upper limit would be exceeded where the arrow indicates that the actual value exceeds the max value. In this case regardless of the demand the voltage supply to the consumer device 103 would not be provided more than the max value. In this case the max value would be selected prevent destruction of the consumer device 103 or to prevent the power supply grid from a blackout from too high power demand.

In figure 4 the lower limit would be undercut where the arrow indicates that the actual value is below the min value. In this case regardless of the demand the voltage supply to the consumer device 103 would not be provided less than the min value. The min value in this case would be selected to not destroy the consumer device 103. It would be applicable, for example in competing control when the consumer device 103 would be in a rest state but could still charge its battery.

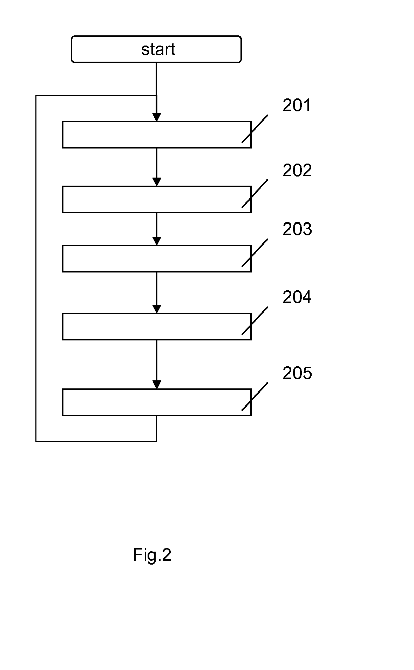

A method of automatically stabilizing in an electrical power grid is described below, making reference to figure 2. It is in this example assumed that a histogram according to figure 3 or 4 is already available, e.g. stored, from previously captured data. For the first run of the method, a default histogram may be used. In the example the default histogram covers a time period of 24 hours and contains as history diagram a constant value matching the standard value. The current time of day is measured in the device 102 and the method for example in Coordinated Universal Time, well known as UTC. Any other time such as Greenwich Mean Time may be used as well.

The method for example starts, whenever the device is switched on. After the start a step 201 is executed.

In step 201, information about the voltage received from the power supply line 101 is determined. For example the input voltage is measured. Afterwards a step 302 is executed.

In step 202 information about the energy demand of the consumer device 103 is determined. For example the voltage level at the consumer device 103 at the current time is determined by measurement. Optionally this steps comprises predicting the voltage level at the consumer device from the histogram, e.g. by extrapolation or interpolation of the historic data to find the value e.g. for the current time of day and day of week.

The voltage level in this example is indicative of a behavioral parameter of the consumer device 103. The step 202 may comprise receiving information indicative of the behavioral or ambiance parameters of the consumer device or predicting the demand depending on these parameters. In the example of the water boiler, the predetermined standard temperature, e.g. 40° C is may also be received. Afterwards a step 203 is executed.

In step 203 the histogram of voltage level or the behavioral or ambiance parameters is recorded. In the example of the water boiler, the predetermined standard temperature, e.g. 40° C may also be recorded. In that case, the histogram contains an indication of predetermined standard temperature. For example the histogram of figure 3 or 4 is populated with new data for the current time of day, e.g. by averaging the existing history diagram value of the current time with the voltage level at the consumer device 103 of step 202 and storing the result in the histogram as replacement of the history diagram data point for the current time.

Afterwards a step 204 is executed.

In step 204 a threshold is determined for comparing to information about the voltage level at the consumer device 103 received in step 202. The threshold is in the example determined depending on information about the voltage received from the power supply line 101 in step 201. Additionally or alternatively the behavioral or ambiance parameters at the consumer device 103 measured over time may be used. In the example, the threshold is either set as in figure 3 to a value lower than the standard value to initiate higher than standard consumption, in case the voltage received from the power supply line 101 is higher than the standard value. Or the threshold is set as in figure 4 to a value higher than the standard value to initiate lower than standard consumption, in case the voltage received from the power supply line 101 is lower than the standard value. In the example of the water boiler, the threshold may be set as described above depending on the predetermined standard temperature, e.g. 40 °.

Afterwards a step 205 is executed.

In step 205 the output voltage for the consumer device 103 is controlled depending on the determined information and threshold. In the example the output voltage is set to exceed the standard value by a predetermined offset, e.g. 2 volts, or to fall below the standard value by the predetermined offset, e.g. 2 volts. The offset may depend on time of day, day of week, behavioral or ambience parameters as well. Preferably this step comprises controlling the output voltage depending on the power limit, e.g. the max value or min value. For example the output voltage may not exceed the max value or drop below the min value.

Afterwards step 201 is executed.

The method ends for example when the device 102 or the consumer device 103 is switched off.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method of automatically stabilizing in an electrical power grid, **comprising**
- determining (201) information about a received voltage,
- determining (202) information about an energy demand of a consumer device,
- determining (204) a threshold for comparing to information about the received voltage,
- controlling (205) an output voltage for the consumer device depending on the determined information and threshold.

2. The method according to claim 1, wherein the threshold is determined (204) depending on information about a voltage level at the consumer device measured over time.

3. The method according to claim 1 or 2, comprising recording (203) a histogram of behavioral or ambiance parameters, wherein the threshold is determined depending on the recorded histogram.

4. The method according to any of aforementioned claims, comprising predicting (202) the voltage level at the consumer device.

5. The method according to any of aforementioned claims, comprising receiving (202) information indicative of the behavioral or ambiance parameters.

6. The method according to any of aforementioned claims, comprising controlling (205) the output voltage depending on a power limit.

7. A device (102) for automatically stabilizing in an electrical power grid (100), **comprising**
- an input (110) adapted to determine information about a received voltage,
- another input (120) adapted to determine information about an energy demand of a consumer device (103),
- a processor (130) adapted to determine a threshold for comparing to the received voltage,
- an output (140) adapted to control an output voltage for the consumer device (103) depending on the determined information and threshold.

8. The device (102) according to claim 7, wherein the threshold is determined depending on information about a voltage level at the consumer device (103) measured over time.

9. The device (102) according to claim 7 or 8, comprising a storage (150) adapted to record a histogram of behavioral or ambiance parameters, wherein processor (130) is adapted to determine the threshold depending on the recorded histogram.

10. The device (102) according to any of claims 7 to 9, wherein the processor (130) is adapted to predict the voltage level at the consumer device (103).

11. The device (102) according to any of claims 7 to 10, wherein the other input (120) is adapted to receive information indicative of the behavioral or ambiance parameters.

12. The device (102) according to any of claims 7 to 11, wherein the output is adapted to control the output voltage depending on a power limit.

13. A computer program for automatically stabilizing in an electrical power grid, **wherein** said computer program, when executed on a computer, causes the computer to perform the steps of the method according to claim 1.

## Amended claims

### Amended claims in accordance with Rule 137(2) EPC.

**1.** A method of automatically stabilizing in an electrical power grid, **comprising**
- determining (201) a voltage level at a power line (104) as information about a received voltage of a consumer device (103),
- controlling (205) an output voltage for the consumer device (103) depending on a threshold determined depending on ambience parameters and the information about the received voltage.

**2.** The method according to claim 1, wherein the threshold is determined (204) depending on information about a voltage level at the consumer device measured over time.

**3.** The method according to claim 1 or 2, comprising recording (203) a histogram of behavioral or ambiance parameters, wherein the threshold is determined depending on the recorded histogram.

**4.** The method according to any of aforementioned claims, comprising predicting (202) the voltage level at the consumer device.

**5.** The method according to any of aforementioned claims, comprising receiving (202) information indicative of the behavioral or ambiance parameters.

**6.** The method according to any of aforementioned claims, comprising controlling (205) the output voltage depending on a power limit.

**7.** A device (102) for automatically stabilizing in an electrical power grid (100), **comprising**
- an input (110) adapted to determine a voltage level at a power line (104) as information about a received voltage of a consumer device (103),
- an output (140) adapted to control an output voltage for the consumer device (103) depending on a threshold determined depending on ambience parameters and the information about the received voltage.

**8.** The device (102) according to claim 7, wherein the threshold is determined depending on information about a voltage level at the consumer device (103) measured over time.

**9.** The device (102) according to claim 7 or 8, comprising a storage (150) adapted to record a histogram of behavioral or ambiance parameters, wherein processor (130) is adapted to determine the threshold depending on the recorded histogram.

**10.** The device (102) according to any of claims 7 to 9,
wherein the processor (130) is adapted to predict the voltage level at the consumer device (103).

**11.** The device (102) according to any of claims 7 to 10,
wherein the other input (120) is adapted to receive information indicative of the behavioral or ambiance parameters.

**12.** The device (102) according to any of claims 7 to 11,
wherein the output is adapted to control the output voltage depending on a power limit.

**13.** A computer program for automatically stabilizing in an electrical power grid, **wherein** said computer program, when executed on a computer, causes the computer to perform the steps of the method according to claim 1.
